# EUROPÄISCHE PATENTSCHRIFT

(11) **EP 2 907 778 B1**
(45) Veröffentlichungstag und Bekanntmachung des Hinweises auf die Patenterteilung: **24.05.2017**
(21) Anmeldenummer: 15150902.3
(22) Anmeldetag: 13.01.2015
(51) Int. Cl.: B65G 49/04

(54) **Tauchbehandlungsanlage**
Dip coating system
Installation de traitement par trempage

(30) Priorität: 13.02.2014 DE 102014101823
(43) Veröffentlichungstag der Anmeldung: 19.08.2015
(73) Patentinhaber: CLAAS Selbstfahrende Erntemaschinen GmbH, 33428 Harsewinkel (DE)
(72) Erfinder: Bischof, Ulrich, 33428 Harsewinkel (DE); Pankoke, Hendrik, 32278 Kirchlengern (DE); Brockmann, Achim, 33428 Harsewinkel (DE)

(56) Entgegenhaltungen:
- EP-A1- 0 001 405
- EP-A1- 0 683 290
- WO-A1-86/06007
- WO-A1-2008/025498
- WO-A1-2011/032920
- DE-A1- 2 608 550
- DE-U1- 7 607 660

## Beschreibung

Die Erfindung betrifft eine Tauchbehandlungsanlage gemäß dem Oberbegriff von Anspruch 1 und eine Tauchbehandlungsstraße gemäß dem Oberbegriff von Anspruch 10.

Tauchbehandlungsanlagen der in Rede stehenden Art finden Anwendung in unterschiedlichen technischen Bereichen, wie dem Lackieren, Galvanisieren oder Vorbehandeln von Bauteilen. Vorliegend steht der Anwendungsbereich des Vorbehandelns von Bauteilen für eine nachfolgende KTL-Lackierung (Kathodische Tauchlackierung), insbesondere die Entfettung von Bauteilen, im Vordergrund.

Die bekannte Tauchbehandlungsanlage (DE 10 2011 082 798 A1), von der die Erfindung ausgeht, weist ein temperiertes Bauteilbehandlungsbecken auf, in das die zu behandelnden Bauteile mittels einer Bauteilhandhabungsvorrichtung eingetaucht werden. Die Temperierung des Behandlungsmediums ist für den Behandlungsprozess erforderlich. Bei der Entfettung liegt die Temperatur des Behandlungsmediums in einem Temperaturbereich zwischen 50°C und 70°C.

Bei der bekannten Tauchbehandlungsanlage ist die Beckenöffnung des Bauteilbehandlungsbeckens stets frei, so dass die Tauchbehandlung mittels der Bauteilhandhabungsvorrichtung flexibel und schnell erfolgen kann.

Mit der Temperierung des Behandlungsmediums geht eine erhöhte Verdunstung des Behandlungsmediums und eine Abstrahlung von Wärmeenergie, jeweils über die Flüssigkeitsoberfläche, einher. Die Verdunstung führt einerseits zu einem Verlust eines Teils des Behandlungsmediums sowie durch die unterschiedliche Verdunstung der einzelnen Komponenten des Behandlungsmediums zu einer ungewünschten Änderung des Mischungsverhältnisses zwischen den Komponenten. Das Ergebnis ist eine Reduzierung der Prozesssicherheit, sofern diese Effekte nicht kostenaufwändig kompensiert werden.

Die Wärmeabstrahlung ist als solche ein Kostenfaktor, da laufend eine entsprechend kostenintensive Nachregelung der Temperierung erforderlich ist.

Die obigen, nachteiligen Effekte sind in der DE 10 2011 082 798 A1 berreits identifiziert worden. Als Lösung wird hierzu angegeben, dass die Beckenöffnung des Bauteilbehandlungsbeckens so klein wie möglich gehalten wird. Das führt allerdings zu Einschränkungen bei der Bauteilhandhabung.

Die DE 1 434 647 B schlägt zur Wärmeisolierung eines Beckens mit temperierter Flüssigkeit eine Abdeckung vor, die sich, getrieben durch ihre eigene Gewichtskraft, selbsttätig nach unten in die jeweilige Beckenöffnung schiebt. Die Anordnung ist weit in das Becken hineinragend ausgestaltet, so das die Abdeckung nach unten in das Becken abgegeben werden kann. Die nutzbare Beckenfläche wird durch diese Anordnung in nennenswerter Weise reduziert. Eventuelle Handhabungsgeräte werden durch diese Anordnung behindert. Eine Nutzung für eine industrielle Tauchbehandlungsanlage mit einer Bauteilhandhabungsvorrichtung ist somit ausgeschlossen.

Die WO 86/06007 A1 offenbart eine Tauchbehandlungsanlage nach dem Oberbegriff des Anspruchs 1.

Der Erfindung liegt das Problem zu Grunde, die bekannte Tauchbehandlungsanlage derart auszugestalten und weiterzubilden, dass die auf eine Temperierung des Behandlungsmediums zurückgehenden Kosten mit einfachen, konstruktiven Mitteln reduziert werden, ohne die Bauteilhandhabung zu behindern.

Das obige Problem wird durch die Merkmale des Anspruchs 1 gelöst.

Wesentlich ist die grundsätzliche Erkenntnis, dass eine Abdeckbahn zur Abdeckung der Beckenöffnung eines Bauteilbehandlungsbeckens industriell anwendbar wird, wenn die hierfür erforderlichen Komponenten nicht in das Bauteilsbehandlungsbecken hineinragen.

Im Einzelnen wird zunächst vorgeschlagen, dass eine Abdeckbahn und ein außerhalb des Behandlungsmediums angeordneter Abdeckbahnspeicher vorgesehen sind. Der Abdeckbahnspeicher dient der Lagerung, dem Ausgeben und dem Einziehen der Abdeckbahn. Die Anordnung des Abdeckbahnspeichert außerhalb des Behandlungsmediums ist insoweit vorteilhaft, als dadurch der Kontakt des Abdeckbahnspeichers und der Abdeckbahn mit dem Behandlungsmedium auf ein Minimum reduziert werden kann. Dies ist insbesondere sachgerecht, als es sich bei dem Behandlungsmedium um ein säure- oder laugehaltiges Medium handeln kann.

Es wurde weiter erkannt, dass eine vom Bauteilbehandlungsbecken separate Ausgestaltung des Abdeckbahnspeichers am besten mit einer Wickelvorrichtung für die Abdeckbahn realisiert werden kann. Dabei ist die Wickelvorrichtung von einem Gehäuse aufgenommen. Der Begriff "Gehäuse" ist hier weit zu verstehen. Bei dem Gehäuse muss es sich nicht notwendiger Weise um ein geschlossenes Gehäuse handeln. Entsprechend ist auch ein die Wickelvorrichtung aufnehmendes Traggestell als Gehäuse zu verstehen.

Vorschlagsgemäß ist die Abdeckbahn von der Wickelvorrichtung abwickelbar, was mit einem flächigen Abdecken der Beckenöffnung einhergeht. Umgekehrt ist die Abdeckbahn auf die Wickelvorrichtung aufwickelbar, was mit einem Freigeben der Beckenöffnung einhergeht.

Von besonderer Bedeutung für die vorschlagsgemäße Lösung ist die Tatsache, dass die Beckenöffnung und der Bereich oberhalb der Beckenöffnung frei von der Wickelvorrichtung und dem Gehäuse des Abdeckbahnspeichers sind. Damit ist gewährleistet, dass die volle Fläche der Beckenöffnung für die Tauchbehandlung genutzt werden kann, ohne dass die Bauteilhandhabungsvorrichtung durch die Wickelvorrichtung bzw. das zugeordnete Gehäuse behindert wird.

Die Lösung ermöglicht gemäß Anspruch 1, dass der Abdeckbahnspeicher vom Rand der Beckenöffnung horizontal beabstandet angeordnet ist. Hierdurch ist es möglich, die Lage des Abdeckbahnspeichers auf die Bewegungsräume anderer Komponenten, insbesondere der Bauteilhandhabungsvorrichtung, abzustimmen.

Durch den Versatz des Abdeckbahnspeichers von dem Bauteilbehandlungsbecken weg ergibt sich ein Übergangsbereich gemäß Anspruch 2, der vorzugsweise mit einer Stützanordnung für die Abdeckbahn ausgestattet ist. Die Stützanordnung stellt eine Abstützung gegen die Schwerkraft bereit, um ein Durchhängen der Abdeckbahn nach unten zu verhindern.

Eine volle Ausnutzung der Fläche der Beckenöffnung für die Tauchbehandlung, lässt sich erzielen, indem in einer bevorzugten Variante auf eine Führung der Abdeckbahn innerhalb des Bauteilbehandlungsbeckens verzichtet wird. Durch das Aufschwimmen der Abdeckbahn auf dem Behandlungsmedium kann auf jegliche Führungen verzichtet werden, sofern die Breite der Abdeckbahn auf die entsprechende Breite des Bauteilbehandlungsbeckens abgestimmt ist.

Bei den besonders bevorzugten Ausgestaltungen gemäß den Ansprüchen 4 und 5 handelt es sich bei der Abdeckbahn um eine rollladenähnlich aufgebaute Bahn, die zumindest zum Teil aus einer Mehrzahl nebeneinanderliegender Lamellen gebildet ist. Durch die besonders bevorzugte Ausgestaltung gemäß Anspruch 8 lässt sich die Schwimmfähigkeit der Abdeckbahn insgesamt dadurch realisieren, dass die Lamellen jeweils mindestens eine geschlossene Luftkammer aufweisen.

Die obige Ausgestaltung der Abdeckbahn mit Lamellen ist vor allem für die Anwendung in aggressiven Behandlungsmedien vorteilhaft, da die Lamellen ohne Weiteres säureresistent und/oder laugeresistent ausgestaltet oder beschichtet sein können.

Bei den weiter bevorzugten Ausgestaltungen gemäß den Ansprüchen 6 bis 9 wird dem oben angesprochene Übergangsbereich mindestens eine Zusatzfunktion zugewiesen.

Die Reinigungsvorrichtung gemäß den Ansprüchen 6 und 7 sorgt dafür, dass beim Aufwickeln und/oder Abwickeln der Abdeckbahn eine Reinigung der Abdeckbahn erfolgt. Dies ist insbesondere bei der Verwendung eines aggressiven Behandlungsmediums beim Aufwickeln erforderlich, um sicherzustellen, dass dieses aggressive Behandlungsmedium nicht in dem Abdeckbahnspeicher verbleibt.

Grundsätzlich kann die Reinigungsvorrichtung stets aktiviert sein und insbesondere mittels eines Applikators für Reinigungsflüssigkeit auf die Abdeckbahn einwirken. Im Sinne einer hohen Kosteneffizienz ist es allerdings vorteilhaft, wenn die Reinigungsvorrichtung gemäß Anspruch 7 elektrisch ansteuerbar ist, so dass die Applikation von Reinigungsflüssigkeit steuerungstechnisch ausgelöst und gestoppt werden kann.

Entsprechend ist gemäß Anspruch 9 eine Anlagensteuerung vorgesehen, die beim Aufwickeln und/oder beim Abwickeln der Abdeckbahn die Reinigungsvorrichtung ansteuert. In einer bevorzugten Variante wird die Reinigungsvorrichtung nur beim Aufwickeln angesteuert, um das Einbringen vom Behandlungsmedium in dem Abdeckbahnspeicher zu vermeiden.

Nach einer weiteren Lehre gemäß Anspruch 10, der eigenständige Bedeutung zukommt, wird eine Tauchbehandlungsstraße mit mindestens zwei Tauchbehandlungsstationen beansprucht.

Bei den obigen Tauchbehandlungsstationen kann es sich um Entfettungsstationen, Spülstationen, Aktivierungsstationen, Passivierungsstationen, Lackierstationen o. dgl. handeln. Wesentlich nach der weiteren Lehre ist, dass mindestens eine der Tauchbehandlungsstationen, insbesondere mindestens eine Entfettungsstation, als vorschlagsgemäße, oben erläuterte Tauchbehandlungsanlage ausgestaltet ist.

Als "Tauchbehandlungsstraße" wird vorliegend eine Anordnung aus mindestens zwei Tauchbehandlungsstationen verstanden, die in irgendeiner Weise verkettet sind. Dabei muss es sich nicht notwendiger Weise um eine automatisierte Verkettung handeln. Denkbar ist auch, dass der Bauteilvorschub über entsprechende Bauteilhandhabungsvorrichtungen manuell gesteuert wird.

Bei der besonders bevorzugten Ausgestaltung gemäß Anspruch 11 ist eine Entfettungsstation als vorschlagsgemäße Tauchbehandlungsanlage ausgestaltet, die einer Lackierstation vorgeschaltet ist. Die in der Entfettungsstation regelmäßig erforderliche, hohe Temperierung des Behandlungsmediums lässt die vorschlagsgemäße Lösung hier als besonders vorteilhaft erscheinen.

In einer ersten Variante erfolgt die Abdeckung des Bauteilbehandlungsbeckens nur bei längeren Produktionsunterbrechungen oder Produktionsumstellungen. Denkbar ist aber auch, dass die Abdeckung nach jedem Bauteil oder einer Gruppe von Bauteilen abgedeckt wird, bis das nächste Bauteil oder die nächsten Bauteile zur Tauchbehandlung anstehen.

In besonders bevorzugter Ausgestaltung wird beim Aufwickeln und/oder beim Abwickeln der Abdeckbahn eine Reinigungsvorrichtung zum Reinigen der Abdeckbahn angesteuert, so dass insoweit eine Synchronisierung zwischen dem Abdecken und dem Reinigen erfolgt.

Im Folgenden wird die Erfindung anhand einer lediglich ein Ausführungsbeispiel darstellenden Zeichnung näher erläutert. In der Zeichnung zeigt:
- Fig. 1: einen Ausschnitt aus einer vorschlagsgemäßen Tauchbehandlungsanlage in einer Draufsicht,
- Fig. 2: die Tauchbehandlungsanlage gemäß Fig. 1 in einer Schnittansicht entlang der Schnittlinie II-II,
- Fig. 3: die Tauchbehandlungsanlage gemäß Fig. 2 in der dortigen Detailansicht III.

Die vorschlagsgemäße Tauchbehandlungsanlage 1 kann für verschiedene Anwendungsbereiche eingesetzt werden. Vorliegend handelt es sich bei der Tauchbehandlungsanlage 1 um eine Entfettungsanlage für die Entfettung von Bauteilen 2, die nachfolgend einer Lackierstation zugeführt werden. Bei den Bauteilen 2 kann es sich beispielsweise um Karosseriebauteile oder um Strukturbauteile von Fahrzeugen, insbesondere von Landmaschinen, handeln.

Ganz allgemein dient die dargestellte Tauchbehandlungsanlage 1 zur Tauchbehandlung der Bauteile 2, wobei die Tauchbehandlungsanlage 1 ein Bauteilbehandlungsbecken 3 zur Aufnahme von flüssigem Behandlungsmedium 4 aufweist. Das Bauteilbehandlungsbecken 4 zeigt eine Beckenöffnung 5, die durch einen Beckenrand 6 begrenzt ist.

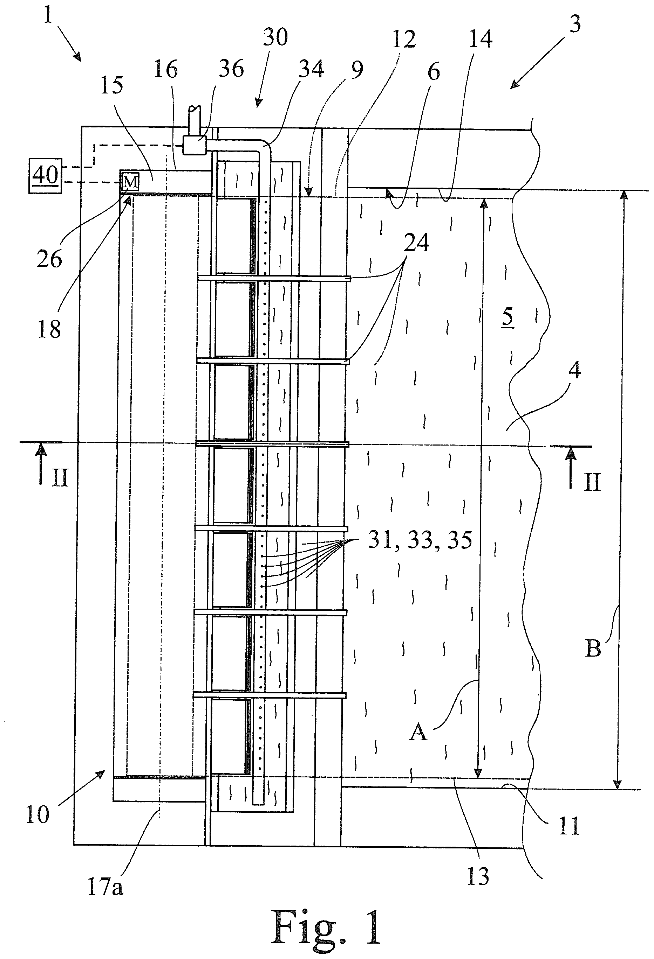

Zur Temperierung des Behandlungsmediums 4 ist dem Bauteilbehandlungsbecken 3 eine Beckenheizung 7 zugeordnet. Die Beckenheizung 7 kann, wie in Fig. 1 dargestellt, außerhalb des Bauteilbehandlungsbeckens 3 oder aber innerhalb des Bauteilbehandlungsbeckens 3 angeordnet sein.

Fig. 1 zeigt ferner eine Bauteilhandhabungsvorrichtung 8 zum Eintauchen mindestens eines zu behandelnden Bauteils 2 von oben in die Beckenöffnung 5. Bei dem in Fig. 1 dargestellten und insoweit bevorzugten Ausführungsbeispiel lassen sich mit der Bauteilhandhabungsvorrichtung 8 gleichzeitig mehrere Bauteile 2 in das Behandlungsmedium 4 eintauchen.

Hier und vorzugsweise ist das Bauteilbehandlungsbecken 3 im Wesentlichen quaderförmig ausgestaltet. Die jeweils gegenüberliegenden Seiten sind also im Wesentlichen parallel zueinander ausgerichtet. Andere Geometrien für das Bauteilbehandlungsbecken 3 sind denkbar.

Fig. 1 zeigt weiter, dass eine Abdeckbahn 9 und ein außerhalb des Behandlungsmediums 4 angeordneter Abdeckbahnspeicher 10 vorgesehen sind.

Die Abdeckbahn 9 dient der zumindest teilweisen Abdeckung der Beckenöffnung 5. Hier und vorzugsweise sind die beiden gegenüberliegenden Längskanten 11, 12 parallel zueinander ausgerichtet. Ferner ist es hier und vorzugsweise so, dass die Längskanten 13, 14 der Beckenöffnung 5 parallel zueinander ausgerichtet sind, so dass sich die Abdeckbahn 9 parallel zu den Längskanten 11, 12 der Beckenöffnung 5 vorschieben lässt. In besonders bevorzugter Ausgestaltung entspricht die Breite B der Beckenöffnung 5 im Wesentlichen der Breite A der Abdeckbahn 9, um eine optimale Abdeckung zu erreichen. Hier und vorzugsweise ist es zur Vermeidung eines verschleißanfälligen Eingriffs zwischen der Abdeckbahn 9 und der Beckenöffnung 5 allerdings so, dass die Breite B der Beckenöffnung 5 zumindest geringfügig größer ist als die Breite A der der Abdeckbahn 9.

Der Abdeckbahnspeicher 10 dient der Lagerung, dem Ausgeben und dem Einziehen der Abdeckbahn 9. Hierfür ist dem Abdeckbahnspeicher 10 eine Wickelvorrichtung 15 für die Abdeckbahn 9 zugeordnet. Ferner weist der Abdeckbahnspeicher 10 ein Gehäuse 16 zur Aufnahme der Wickelvorrichtung 15 auf. Für das weite Verständnis des Begriffs "Gehäuse" darf auf die obigen Ausführungen verwiesen werden.

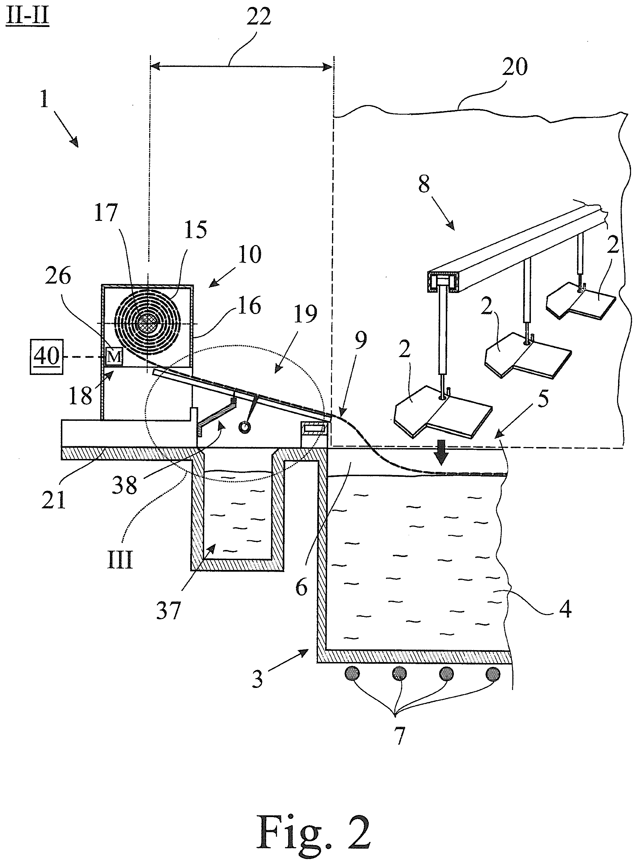

Die Wickelvorrichtung 15 weist eine Wickelwelle 17 und einen Wickelwellenantrieb 18 auf. Die Abdeckbahn 9 ist durch eine Drehung der Wickelwelle 17 in der Schnittansicht gemäß Fig. 2 gegen den Uhrzeigersinn von der Wickelvorrichtung 15 abwickelbar. Dadurch bewegt sich der freie Abschnitt 19 der Abdeckbahn 9 in Fig. 2 nach rechts weiter in Richtung der Beckenöffnung 5. Die Draufsicht gemäß Fig. 1 zeigt, dass dabei die Beckenöffnung 5 sukzessive flächig abgedeckt wird.

Umgekehrt ist die Abdeckbahn 9 auch auf die Wickelvorrichtung 15 aufwickelbar, nämlich durch eine Drehung der Wickelwelle 17 in der Schnittansicht gemäß Fig. 2 im Uhrzeigersinn. Dabei wird die Beckenöffnung 5 freigegeben, weil der freie Abschnitt 19 der Abdeckbahn 9 sukzessive aus der Beckenöffnung 5 herausgezogen wird.

Während das Aufwickeln ausschließlich auf die Antriebskraft des Wickelwellenantriebs 18 zurückgeht, lässt sich für das Abwickeln bei geeigneter Auslegung die Gewichtskraft des freien Abschnitts 19 der Abdeckbahn 9 nutzen. Grundsätzlich ist es hier und vorzugsweise jedoch vorgesehen, dass die Abdeckbahn 9 beim Abwickeln durch den Wickelwellenantrieb 18 vorgeschoben wird.

Von besonderer Bedeutung ist die Tatsache, dass die Beckenöffnung 5 und der Bereich 20 oberhalb der Beckenöffnung 5 frei von der Wickelvorrichtung 15 und dem Gehäuse 16 des Abdeckbahnspeichers 10 ist. Der Bereich oberhalb der Beckenöffnung 5 ist zur Klarstellung in der Schnittansicht gemäß Fig. 2 mit einem gestrichelten Kasten 20 angedeutet. In dieser Darstellung zeigt sich, dass mit der vorschlagsgemäßen Lösung eine optimale Ausnutzung des Bauteilbehandlungsbeckens 3 für die Tauchbehandlung möglich ist, ohne dass die Bauteilhandhabungsvorrichtung 8 in irgendeiner Weise von dem Abdeckbahnspeicher 10 behindert wird.

Zur Klarstellung darf darauf hingewiesen werden, dass die Tauchbehandlungsanlage 1 grundsätzlich auch mehrere Bauteilbehandlungsbecken 3 aufweisen kann, die durch ein und dieselbe Abdeckbahn 9 abdeckbar sind. Dann ist es vorschlagsgemäß so, dass alle Bereiche oberhalb der jeweiligen Beckenöffnungen frei von der Wickelvorrichtung 15 und dem Gehäuse 16 sein sollen.

Die vorschlagsgemäße Tauchbehandlungsanlage 1 lässt sich auf besonders einfache Weise auf bestehende Teilbehandlungsbecken 3 nachrüsten, da der Abdeckbahnspeicher 10 in einer bevorzugten Variante auf eine neben der Beckenöffnung 5 liegende Montagefläche 21 aufgesetzt ist.

Grundsätzlich kann der Abdeckbahnspeicher 10 unmittelbar an den Beckenrand 6 der Beckenöffnung 5 heranreichen. Hier und vorzugsweise ist es allerdings so, dass der Abdeckbahnspeicher 10 vom Beckenrand 6 der Beckenöffnung 5 horizontal beabstandet angeordnet ist. Bei der vorschlagsgemäßen Lösung ist die Lage des Abdeckbahnspeichers 10 weitgehend frei wählbar, so dass die Lage des Abdeckbahnspeichers 10 auf die jeweiligen geometrischen Gegebenheiten angepasst werden kann.

Fig. 1 zeigt, dass die Abdeckbahn 9 beim Abwickeln einen zumindest zum Teil außerhalb der Beckenöffnung 5 gelegenen Übergangsbereich 22 mit einer horizontalen Erstreckung durchläuft, der hier und vorzugsweise mit einer Stützanordnung 23 für die Abdeckbahn 9 ausgestattet ist. Die Stützanordnung 23 weist vorzugsweise mehrere Stützstreben 24 auf, die in der Bewegungsrichtung 25 der Abdeckbahn 9 ausgerichtet sind. Die Stützstreben 24 vermeiden, dass die Abdeckbahn 9 im Übergangsbereich 22 schwerkraftbedingt nach unten durchhängt.

Interessant bei dem in Fig. 1 dargestellten und insoweit bevorzugten Ausführungsbeispiels ist die Tatsache, dass im Übergangsbereich 22 die Abdeckbahn 9 im Querschnitt senkrecht zu der Wickelwellenachse 17a gesehen bezogen auf die Horizontale flach verläuft und, vorzugsweise, mit der Horizontalen einen Winkel ϕ von weniger als 45° einschließt.

Eine Zusammenschau der Schnittansicht gemäß Fig. 2 und der Draufsicht gemäß Fig. 1 zeigt, dass eine seitliche Führung der Abdeckbahn 9 innerhalb des Bauteilbehandlungsbeckens 3 nicht vorgesehen ist. Das ist dadurch möglich, dass die Abdeckbahn 9 beim Abwickeln von der Wickelvorrichtung 15 auf das Behandlungsmedium 4 aufschwimmt. Hier und vorzugsweise ist es so, dass der im Bauteilbehandlungsbecken 3 befindliche Abschnitt der Abdeckbahn 9 ausschließlich durch seinen statischen Auftrieb im Behandlungsmedium 4 gegenüber der Schwerkraft abgestützt ist. Grundsätzlich ist es aber auch denkbar, dass eine geringfügige seitliche Abstützung der Abdeckbahn 9 vorgesehen ist.

Es wurde weiter oben bereits angedeutet, dass die Wickelvorrichtung 15 einen Wickelwellenantrieb 18 aufweist. Dem Wickelwellenantrieb 18 ist hier und vorzugsweise ein Elektromotor 26 zugeordnet. Je nach Auslegung kann es auch erforderlich sein, dass ein dem Elektromotor 26 nachgeschaltetes Getriebe vorgesehen ist. In besonders bevorzugter Ausgestaltung ist der Wickelwellenantrieb 18 selbsthemmend ausgestaltet, so dass eine Verstellung der Abdeckbahn 9 bei abgeschaltetem Elektromotor 26 durch den Wickelwellenantrieb 18 blockiert ist.

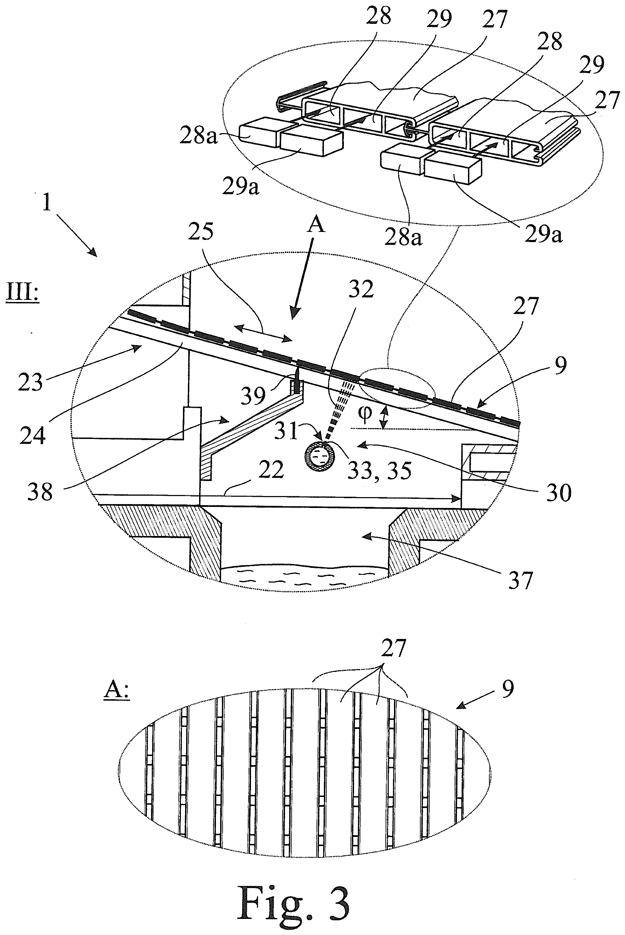

Im Hinblick auf die Verschleißfestigkeit und die Resistenz gegen aggressive Behandlungsmedien 4 ist die Abdeckbahn 9 vorzugsweise zumindest zum Teil aus einer Mehrzahl nebeneinanderliegender Lamellen 27 gebildet, wobei jeweils benachbarte Lamellen 27 derart miteinander verkettet sind, dass die Abdeckbahn 9 auf die Wickelvorrichtung 15 aufwickelbar ist. Der grundsätzliche Aufbau der Lamellen 27 lässt sich der Darstellung gemäß Fig. 3 entnehmen. Daraus wird deutlich, dass die Lamellen 27 vorschlagsgemäß rollladenartig miteinander verkettet sind.

Im Sinne einer kostengünstigen Herstellbarkeit im Spritzgießverfahren sind die Lamellen 27 jeweils, zumindest zum Teil, aus einem Kunststoffmaterial, insbesondere einem PVC-Material, gebildet. In besonders bevorzugter Ausgestaltung ist das Kunststoffmaterial als solches säureresistent und/oder laugeresistent. Eine besonders kostengünstige Variante kann sich dadurch ergeben, dass das Kunststoffmaterial als solches nicht säureresistent bzw. laugeresistent ist, dass das Kunststoffmaterial allerdings mit einer säureresistenten oder laugeresistenten Beschichtung versehen ist.

Der oberen Detaildarstellung gemäß Fig. 3 lässt sich entnehmen, dass die Lamellen 27 jeweils mindestens eine geschlossene Luftkammer 28, 29, hier und vorzugsweise jeweils genau zwei geschlossene Luftkammern 28, 29, aufweisen, so dass die Lamellen 27 jeweils für sich im Wasser schwimmfähig sind. Bei dem in Fig. 3 dargestellten und insoweit bevorzugten Ausführungsbeispiel ist den Luftkammern 28, 29 beidseitig jeweils ein Verschlussstopfen 28a, 29a zugeordnet, um die Dichtheit der Luftkammern 28, 29 zu gewährleisten.

Alternativ zu der Ausgestaltung der Abdeckbahn 9 aus den oben genannten Lamellen 27 kann es vorgesehen sein, dass die Abdeckbahn 9 zumindest zum Teil als Plane, insbesondere als Kunststoffplane, ausgestaltet ist, die mittels der Wickelvorrichtung 15 auf- bzw. abwickelbar ist.

Interessant bei der in der Zeichnung dargestellten Ausführungsform ist weiter die Tatsache, dass der Übergangsbereich 22 für die Reinigung der Abdeckbahn 9 genutzt wird. Damit sorgt der Übergangsbereich 22 nicht nur für eine oben angesprochene, vorteilhafte Positionierung des Abdeckbahnspeichers 10, sondern auch für die Bereitstellung von Bauraum für eine Reinigungsvorrichtung 30. Die in dem Übergangsbereich 22 angeordnete Reinigungsvorrichtung 30 dient dem Reinigen der Abdeckbahn 9, so dass insbesondere beim Aufwickeln kein oder nur wenig Behandlungsmedium 4 in den Abdeckbahnspeicher 10 eintritt. Die Fig. 1 und 2 zeigen, dass die Reinigungsvorrichtung 30 beim Aufwickeln und Abwickeln der Abdeckbahn 9 von der Abdeckbahn 9 durchlaufen wird.

Für die Ausgestaltung der Reinigungsvorrichtung 30 sind zahlreiche vorteilhafte Varianten denkbar. Hier und vorzugsweise weist die Reinigungsvorrichtung 30 einen Applikator 31 für Reinigungsflüssigkeit 32, insbesondere für Wasser auf, der auf den die Reinigungsvorrichtung 30 durchlaufenden Abschnitt der Abdeckbahn 9 gerichtet ist. Hier und vorzugsweise weist der Applikator 31 eine Düsenanordnung 33 zur Erzeugung eines Strahls von Reinigungsflüssigkeit 32 auf, der in der mittleren Ansicht von Fig. 3 gezeigt ist.

Die Draufsicht gemäß Fig. 1 zeigt, dass hier und vorzugsweise der Applikator 31 ein sich über zumindest einen Teil der Breite A der Abdeckbahn 9 erstreckendes Rohr 34 aufweist, das entlang seiner Länge mehrere mit dem Inneren des Rohrs 34 kommunizierende Düsen 35 zur Applikation von Reinigungsflüssigkeit 32 aufweist. Eine Beaufschlagung des Inneren des Rohrs 34 führt also zu einer Beaufschlagung der Düsen 35 der Reinigungsflüssigkeit 32, so dass es zu der in Fig. 3 gezeigten Strahlentwicklung kommt.

Alternativ oder zusätzlich kann es beispielsweise vorgesehen sein, dass die Reinigungsvorrichtung 30 eine Bürstenanordnung mit mindestens einer insbesondere angetriebenen Bürste umfasst, die im Übergangsbereich 22 reinigend auf die Abdeckbahn 9 wirkt.

In besonders bevorzugter Ausgestaltung ist die Reinigungsvorrichtung 30 elektrisch ansteuerbar, was im einfachsten Fall bedeutet, dass die Reinigungsvorrichtung 30 steuerungstechnisch ein- und ausgeschaltet werden kann. Für den Fall der Ausstattung der Reinigungsvorrichtung 30 mit einem obigen Applikator 31 für Reinigungsflüssigkeit 32 ist vorzugsweise eine Fluid-Steueranordnung 36 zur Steuerung der Applikation der Reinigungsflüssigkeit 32 vorgesehen. In einer einfach zu realisierenden Ausgestaltung weist die Fluid-Steueranordnung 36 ein elektrisch ansteuerbares Ventil oder eine elektrisch ansteuerbare Pumpe auf.

Bei der obigen Ausstattung der Reinigungsvorrichtung 30 mit einem oben angesprochenen Applikator 31 ist es vorzugsweise so, dass eine unterhalb der Düsenanordnung 33 gelegene Auffangvorrichtung 37 für das Auffangen und/oder den Abfluss der applizierten Reinigungsflüssigkeit 32 vorgesehen ist. Bei dem dargestellten und insoweit bevorzugten Ausführungsbeispiel stellt die Auffangvorrichtung 37 zusätzlich einen Überlauf für das Bauteilbehandlungsbecken 3 bereit. Die Auffangvorrichtung 37 ist vorzugsweise rinnenartig ausgestaltet und verläuft in der Schnittansicht gemäß Fig. 2 senkrecht zur Zeichenebene.

Interessant ist vorliegend die Tatsache, dass der Übergangsbereich 22 eine weitere Zusatzfunktion bereitstellt. Vorzugsweise ist in dem Übergangsbereich 22 eine Abstreifvorrichtung 38 vorgesehen, die die Abdeckbahn 9 bei deren Aufwickeln und/oder Abwickeln abstreift. Die Abstreifvorrichtung 38 ist in der mittleren Ansicht gemäß Fig. 3 zu erkennen. Dieser Darstellung lässt sich entnehmen, dass die Abstreifvorrichtung 38 ein Abstreifelement 39 aufweist, das vorzugsweise als Gummilippe o. dgl. ausgestaltet ist. Die Gummilippe erstreckt sich, lediglich unterbrochen durch die Stützstreben 24, über die gesamte Breite der Abdeckbahn 9. Die Abstreifvorrichtung 38 ist, wie in Fig. 3 gezeigt, über der Auffangvorrichtung 37 angeordnet, so dass abgestreifte Flüssigkeit in die Auffangvorrichtung 37 abfließen kann.

Vorzugsweise ist der Tauchbehandlungsanlage 1 eine elektrische Anlagensteuerung 40 zugeordnet, die beim Aufwickeln und/oder beim Abwickeln der Abdeckbahn 9 die Reinigungsvorrichtung 30 ansteuert. Im Einzelnen bedeutet dies vorzugsweise, dass die Anlagensteuerung 40 beim Aufwickeln und/oder beim Abwickeln der Abdeckbahn 9 den Applikator 31 für Reinigungsflüssigkeit 32 ansteuert, so dass der Strahl von Reinigungsflüssigkeit 32 ausschließlich während des Aufwickelns bzw. des Abwickelns der Abdeckbahn vorliegt. In besonders bevorzugter Ausgestaltung erfolgt die Ansteuerung der Reinigungsvorrichtung 30 ausschließlich beim Aufwickeln der Abdeckbahn 9, da hiermit sichergestellt wird, dass kein und nur wenig Behandlungsmedium 4 in den Abdeckbahnspeicher 10 einläuft.

Die Anlagensteuerung 40 übernimmt also gewissermaßen eine Synchronisierung zwischen dem Wickelwellenantrieb 18 und der Reinigungsvorrichtung 30. Dabei kann es vorgesehen sein, dass der Wickelwellenantrieb 18 und/oder die Reinigungsvorrichtung 30 manuell betätigbar ist bzw. sind. Beispielsweise ist es denkbar, dass das Auf- und Abwickeln der Abdeckbahn 9 manuell, beispielsweise über eine Steuertafel, ausgelöst wird und dass synchronisiert dazu die Ansteuerung der Reinigungsvorrichtung 30 mittels der Anlagensteuerung 40 automatisch vorgenommen wird.

Die vorschlagsgemäße Tauchbehandlungsanlage 1 kann Bestandteil einer Tauchbehandlungsstraße, insbesondere einer Tauchlackierstraße, mit mindestens zwei Tauchbehandlungsstationen sein, wobei die Tauchbehandlungsanlage 1 zumindest eine der Tauchbehandlungsstationen, hier und vorzugsweise eine Entfettungsstation, bereitstellt. Dies ist auch Gegenstand einer eigenständigen Lehre. Alle Ausführungen zu der vorschlagsgemäßen Tauchbehandlungsstraße 1 gelten für diese weitere Lehre entsprechend.

In besonders bevorzugter Ausgestaltung ist die als vorschlagsgemäße Tauchbehandlungsanlage 1 ausgestaltete Entfettungsstation einer Lackierstation, hier und vorzugsweise einer KTL-Lackierstation, vorgeschaltet. Dabei kann es grundsätzlich vorgesehen sein, dass nicht nur die Entfettungsstation, sondern auch die KTL-Lackierstation als vorschlagsgemäße Tauchbehandlungsanlage ausgestaltet ist.

In besonders bevorzugter Ausgestaltung wird beim Aufwickeln und/oder beim Abwickeln der Abdeckbahn 9 eine oben angesprochene Reinigungsvorrichtung 30 zum Reinigen der Abdeckbahn 9 angesteuert. Zusätzlich ist die Synchronisierung vorteilhaft im Hinblick auf den effektiven Einsatz von Reinigungsflüssigkeit 32.

## Patentansprüche

1. Tauchbehandlungsanlage zur Tauchbehandlung von Bauteilen (2), wobei die Tauchbehandlungsanlage (1) ein Bauteilbehandlungsbecken (3) zur Aufnahme von flüssigem Behandlungsmedium (4) mit einer Beckenöffnung (5), eine dem Bauteilbehandlungsbecken (3) zugeordnete Beckenheizung (7) zur Temperierung des Behandlungsmediums (4) und eine Bauteilhandhabungsvorrichtung (8) zum Eintauchen mindestens eines zu behandelnden Bauteils (2) von oben in die Beckenöffnung (5) aufweist, wobei eine Abdeckbahn (9) und ein außerhalb des Behandlungsmediums (4) angeordneter Abdeckbahnspeicher (10) vorgesehen sind, dass der Abdeckbahnspeicher (10) eine Wickelvorrichtung (15) für die Abdeckbahn (9) und ein Gehäuse (16) zur Aufnahme der Wickelvorrichtung (15) aufweist, dass die Abdeckbahn (9) von der Wickelvorrichtung (15) abwickelbar ist und dabei die Beckenöffnung (5) flächig abdeckt, dass die Abdeckbahn (9) auf die Wickelvorrichtung (15) aufwickelbar ist und dabei die Beckenöffnung (5) freigibt und dass die Beckenöffnung (5) und der Bereich (20) oberhalb der Beckenöffnung (5) frei von der Wickelvorrichtung (15) und dem Gehäuse (16) des Abdeckbahnspeichers (10), wobei der Abdeckbahnspeicher (10) auf eine neben der Beckenöffnung (5) liegende Montagefläche (21) aufgesetzt und der Abdeckbahnspeicher (10) vom Beckenrand (6) der Beckenöffnung (5) horizontal beabstandet angeordnet ist, **dadurch gekennzeichnet dass** die Abdeckbahn (9) beim Abwickeln von der Wickelvorrichtung (15) auf das Behandlungsmedium (4) aufschwimmt, vorzugsweise, dass der im Bauteilbehandlungsbecken (3) befindliche Abschnitt der Abdeckbahn (9) ausschließlich durch seinen statischen Auftrieb im Behandlungsmedium (4) gegenüber der Schwerkraft abgestützt ist.

2. Tauchbehandlungsanlage nach einem der vorhergehenden Ansprüche, **dadurch gekennzeichnet, dass** die Abdeckbahn (9) beim Abwickeln einen zumindest zum Teil außerhalb der Beckenöffnung (5) gelegenen Übergangsbereich (22) mit einer horizontalen Erstreckung durchläuft, vorzugsweise, dass im Übergangsbereich (22) eine Stützanordnung (23) für die Abdeckbahn (9) vorgesehen ist, weiter vorzugsweise, dass die Stützanordnung (23) mehrere Stützstreben (24), die in Bewegungsrichtung der Abdeckbahn (9) ausgerichtet sind, aufweist.

3. Tauchbehandlungsanlage nach einem der vorhergehenden Ansprüche, **dadurch gekennzeichnet, dass** die Wickelvorrichtung (15) einen Elektromotor (26) und ggf. ein dem Elektromotor (26) nachgeschaltetes Getriebe aufweist.

4. Tauchbehandlungsanlage nach einem der vorhergehenden Ansprüche, **dadurch gekennzeichnet, dass** die Abdeckbahn (9) zumindest zum Teil aus einer Mehrzahl nebeneinanderliegender Lamellen (27) gebildet ist und dass jeweils benachbarte Lamellen (27) derart miteinander verkettet sind, dass die Abdeckbahn (9) aufwickelbar ist, vorzugsweise, dass die Lamellen (27) jeweils zumindest zum Teil aus einem Kunststoffmaterial gebildet sind, weiter vorzugsweise, dass das Kunststoffmaterial als solches säureresistent ist und/oder laugeresistent ist oder dass das Kunststoffmaterial säureresistent und/oder laugeresistent beschichtet ist.

5. Tauchbehandlungsanlage nach Anspruch 4, **dadurch gekennzeichnet, dass** die Lamellen (27) jeweils mindestens eine geschlossene Luftkammer (28, 29) aufweisen, so dass die Lamellen (27) jeweils für sich in Wasser schwimmfähig sind.

6. Tauchbehandlungsanlage nach Anspruch 2 und ggf. nach einem der Ansprüche 3 bis 5, **dadurch gekennzeichnet, dass** in dem Übergangsbereich (22) eine Reinigungsvorrichtung (30) zum Reinigen der Abdeckbahn (9) vorgesehen ist, die beim Aufwickeln und Abwickeln der Abdeckbahn (9) von der Abdeckbahn (9) durchlaufen wird, vorzugsweise, dass die Reinigungsvorrichtung (30) einen Applikator (31) für Reinigungsflüssigkeit (32), insbesondere für Wasser, aufweist, der auf den die Reinigungsvorrichtung (30) durchlaufenden Abschnitt der Abdeckbahn (9) gerichtet ist, weiter vorzugsweise, dass der Applikator (31) eine Düsenanordnung (33) zur Erzeugung eines Strahls von Reinigungsflüssigkeit (32) aufweist, weiter vorzugsweise, dass der Applikator (31) ein sich über zumindest einen Teil der Breite (A) der Abdeckbahn (9) erstreckendes Rohr (34) aufweist, das entlang seiner Länge mehrere mit dem Inneren des Rohrs (34) kommunizierende Düsen (35) zur Applikation von Reinigungsflüssigkeit (32) aufweist.

7. Tauchbehandlungsanlage nach Anspruch 6, **dadurch gekennzeichnet, dass** die Reinigungsvorrichtung (30) elektrisch ansteuerbar ist, vorzugsweise, dass der Applikator (31) eine Fluid-Steueranordnung (36) zur Steuerung der Applikation der Reinigungsflüssigkeit (32) aufweist, vorzugsweise, dass die Fluid-Steueranordnung (36) ein elektrisch ansteuerbares Ventil oder eine elektrisch ansteuerbare Pumpe aufweist.

8. Tauchbehandlungsanlage nach Anspruch 2 und ggf. nach einem der Ansprüche 3 bis 7 , **dadurch gekennzeichnet, dass** in dem Übergangsbereich (22) eine Abstreifvorrichtung (38) vorgesehen ist, die die Abdeckbahn (9) bei deren Aufwickeln und/oder Abwickeln abstreift.

9. Tauchbehandlungsanlage nach Anspruch 7 und ggf. nach Anspruch 8, **dadurch gekennzeichnet, dass** eine elektrische Anlagensteuerung (40) vorgesehen ist, die beim Aufwickeln und/oder beim Abwickeln der Abdeckbahn (9) die Reinigungsvorrichtung (30) ansteuert, vorzugsweise, dass die Anlagensteuerung (40) beim Aufwickeln und/oder beim Abwickeln der Abdeckbahn (9) den Applikator (31) für Reinigungsflüssigkeit (32) ansteuert.

10. Tauchbehandlungsstraße mit mindestens zwei Tauchbehandlungsstationen, **dadurch gekennzeichnet,**
**dass** mindestens eine der Tauchbehandlungsstationen, insbesondere mindestens eine Entfettungsstation, als Tauchbehandlungsanlage (1) nach einem der vorhergehenden Ansprüche ausgestaltet ist.

11. Tauchbehandlungsstraße nach Anspruch 10, **dadurch gekennzeichnet, dass** die Entfettungsstation einer Lackierstation, insbesondere einer KTL-Lackierstation, vorgeschaltet ist.

## Claims

1. A dip treatment installation for the dip treatment of components (2), wherein the dip treatment installation (1) has a component treatment tank (3) for receiving liquid treatment medium (4) having a tank opening (5), a tank heating means (7) associated with the component treatment tank (3) for temperature control of the treatment medium (4) and a component treatment apparatus (8) for dipping at least one component (2) to be treated from above into the tank opening (5), wherein there are provided a cover web (9) and a cover web storage means (10) arranged outside the treatment medium (4), the cover web storage means (10) has a winding device (15) for the cover web (9) and a housing (16) for accommodating the winding device (15), the cover web (9) can be unwound from the winding device (15) and in that case areally covers the tank opening (5), the cover web (9) can be wound on to the winding device (15) and in that case clears the tank opening (5) and the tank opening (5) and the region (20) above the tank opening (5) are free of the winding device (15) and the housing (16) of the cover web storage means (10), wherein the cover web storage means (10) is fitted on to a mounting surface (21) beside the tank opening (5) and the cover web storage means (10) is arranged horizontally spaced from the tank edge (6) of the tank opening (5), **characterised in that** on being unwound from the winding device (15) the cover web (9) floats on to the treatment medium (4), and preferably the portion of the cover web (9) that is in the component treatment tank (3) is supported in relation to the force of gravity exclusively by its static buoyancy in the treatment medium (4).

2. A dip treatment installation according to claim 1 **characterised in that** on being unwound the cover web (9) passes through a transitional region (22) which is at least in part outside the tank opening (5), with a horizontal extent, and preferably that provided in the transitional region (22) is a support arrangement (23) for the cover web (9), and further preferably the support arrangement (23) has a plurality of support struts (24) oriented in the direction of movement of the cover web (9).

3. A dip treatment installation according to one of the preceding claims **characterised in that** the winding device (15) has an electric motor (26) and possibly a transmission connected downstream of the electric motor (26).

4. A dip treatment installation according to one of the preceding claims **characterised in that** the cover web (9) is formed at least in part from a plurality of mutually juxtaposed plates (27) and that respective adjacent plates (27) are linked together in such a way that the cover web (9) can be wound up, and preferably the plates (27) are respectively formed at least in part from a plastic material, and further preferably the plastic material as such is acid-resistant and/or lye-resistant or the plastic material is acid-resistantly and/or lye-resistantly coated.

5. A dip treatment installation according to claim 4 **characterised in that** the plates (27) each have at least one closed air chamber (28, 29) so that the plates (27) are each respectively floatable in water.

6. A dip treatment installation according to claim 2 and optionally one of claims 3 to 5 **characterised in that** provided in the transitional region (22) is a cleaning device (30) for cleaning the cover web (9), through which the cover web (9) passes when the cover web (9) is being wound up and unwound, and preferably the cleaning device (30) has an applicator (31) for cleaning fluid (32), in particular water, that is directed on to the portion of the cover web (9), passing through the cleaning device (30), and further preferably the applicator (31) has a nozzle arrangement (33) for producing a jet of cleaning fluid (32), and further preferably the applicator (31) has a pipe (34) extending over at least a part of the width (A) of the cover web (9) and having along its length a plurality of nozzles (35) communicating with the interior of the pipe (34) for the application of cleaning fluid (32).

7. A dip treatment installation according to claim 6 **characterised in that** the cleaning device (30) is electrically actuable and preferably the applicator (31) has a fluid control arrangement (36) for controlling the application of the cleaning fluid (32), and preferably the fluid control arrangement (36) has an electrically actuable valve or an electrically actuable pump.

8. A dip treatment installation according to claim 2 and optionally one of claims 3 to 7 **characterised in that** provided in the transitional region (22) is a wiping device (38) which wipes off the cover web (9) when it is being wound up and/or unwound.

9. A dip treatment installation according to claim 7 and optionally claim 8 **characterised in that** there is provided an electrical installation control means (40) which when the cover web (9) is wound up and/or unwound actuates the cleaning device (30) and preferably the installation control means (40) when the cover web (9) is wound up and/or unwound actuates the applicator (31) for cleaning fluid (32).

10. A dip treatment line having at least two dip treatment stations **characterised in that** at least one of the dip treatment stations, in particular at least one degreasing station, is in the form of a dip treatment installation (1) according to one of the preceding claims.

11. A dip treatment line according to claim 10 **characterised in that** the degreasing station is connected upstream of a painting station, in particular a KTL painting station.

## Revendications

1. Installation de traitement par trempage pour le traitement par trempage de pièces (2), l'installation de traitement par trempage (1) comprenant un bassin de traitement de pièces (3) destiné à recevoir de l'agent de traitement liquide (4) et pourvu d'une ouverture de bassin (5), un chauffage de bassin (7) associé au bassin de traitement de pièces (3) pour tempérer l'agent de traitement (4), et un dispositif de manutention de pièces (8) pour tremper au moins une pièce à traiter (2) par le haut dans l'ouverture de bassin (5), une bâche de recouvrement (9) et une réserve de bâche de recouvrement (10) disposée à l'extérieur de l'agent de traitement (4) étant prévues, la réserve de bâche de recouvrement (10) comportant un dispositif d'enroulement (15) pour la bâche de recouvrement (9) et un caisson (16) pour loger le dispositif d'enroulement (15), la bâche de recouvrement (9) étant déroulable du dispositif d'enroulement (15) et recouvrant ainsi l'ouverture de bassin (5) à plat, la bâche de recouvrement (9) étant enroulable sur le dispositif d'enroulement (15) et dégageant ainsi l'ouverture de bassin (5), et l'ouverture de bassin (5) et la zone (20) située au-dessus de l'ouverture de bassin (5) étant débarrassées du dispositif d'enroulement (15) et du caisson (16) de la réserve de bâche de recouvrement (10), la réserve de bâche de recouvrement (10) étant posée sur une surface de montage (21) située à côté de l'ouverture de bassin (5), et la réserve de bâche de recouvrement (10) étant disposée à distance horizontale du bord de bassin (6) de l'ouverture de bassin (5), **caractérisée en ce que**, lorsqu'elle est déroulée du dispositif d'enroulement (15), la bâche de recouvrement (9) flotte sur l'agent de traitement (4), de préférence **en ce que** la portion de bâche de recouvrement (9) se trouvant dans le bassin de traitement de pièces (3) est supportée exclusivement par sa force portante statique dans l'agent de traitement (4) par rapport à la pesanteur.

2. Installation de traitement par trempage selon une des revendications précédentes, **caractérisée en ce que**, lorsqu'elle est déroulée, la bâche de recouvrement (9) franchit une zone de transition (22) d'extension horizontale située à l'extérieur de l'ouverture de bassin (5), de préférence **en ce que** dans la zone de transition (22) est prévu un agencement de soutien (23) pour la bâche de recouvrement (9), plus préférablement **en ce que** l'agencement de soutien (23) comporte plusieurs bras de soutien (24) qui sont orientés dans la direction de déplacement de la bâche de recouvrement (9).

3. Installation de traitement par trempage selon une des revendications précédentes, **caractérisée en ce que** le dispositif d'enroulement (15) comporte un moteur électrique (26) et, le cas échéant, une transmission montée en aval du moteur électrique (26).

4. Installation de traitement par trempage selon une des revendications précédentes, **caractérisée en ce que** la bâche de recouvrement (9) est formée au moins en partie d'une pluralité de lamelles juxtaposées (27), et **en ce que** des lamelles voisines (27) sont solidarisées entre elles de façon que la bâche de recouvrement (9) puisse être enroulée, de préférence **en ce que** les lamelles (27) sont chacune formées au moins en partie d'une matière synthétique, plus préférablement **en ce que** la matière synthétique en soi est résistante aux acides et/ou résistante à la lessive ou **en ce que** la matière synthétique est garnie d'un revêtement résistant aux acides et/ou résistant à la lessive.

5. Installation de traitement par trempage selon la revendication 4, **caractérisée en ce que** les lamelles (27) comportent chacune au moins une chambre à air fermée (28, 29), de sorte que les lamelles (27) peuvent chacune en soi flotter sur l'eau.

6. Installation de traitement par trempage selon la revendication 2 et, le cas échéant, selon une des revendications 3 à 5, **caractérisée en ce que** dans la zone de transition (22) est prévu, pour nettoyer la bâche de recouvrement (9), un dispositif de nettoyage (30) qui est traversé par la bâche de recouvrement (9) lors de l'enroulement et du déroulement de la bâche de recouvrement (9), de préférence **en ce que** le dispositif de nettoyage (30) comporte un applicateur (31) pour du liquide de nettoyage (32), en particulier pour de l'eau, lequel est orienté vers la portion de la bâche de recouvrement (9) traversant le dispositif de nettoyage (30), plus préférablement **en ce que** l'applicateur (31) comprend un agencement de buses (33) pour produire un jet de liquide de nettoyage (32), plus préférablement **en ce que** l'applicateur (31) comprend un tube (34) qui s'étend sur au moins une partie de la largeur (A) de la bâche de recouvrement (9) et qui, sur sa longueur, comporte plusieurs buses (35) communiquant avec l'intérieur du tube (34) pour appliquer du liquide de nettoyage (32).

7. Installation de traitement par trempage selon la revendication 6, **caractérisée en ce que** le dispositif de nettoyage (30) est commandable électriquement, de préférence **en ce que** l'applicateur (31) comprend un dispositif de commande de fluide (36) pour commander l'application du liquide de nettoyage (32), de préférence **en ce que** le dispositif de commande de fluide (36) comprend une valve commandable électriquement ou une pompe commandable électriquement.

8. Installation de traitement par trempage selon la revendication 2 et, le cas échéant, selon une des revendications 3 à 7, **caractérisée en ce que** dans la zone de transition (22) est prévu un dispositif de raclage (38) qui racle la bâche de recouvrement (9) lors de son enroulement et/ou déroulement.

9. Installation de traitement par trempage selon la revendication 7 et, le cas échéant, selon la revendication 8, **caractérisée en ce qu'**il est prévu une commande électrique d'installation (40) qui, lors de l'enroulement et/ou du déroulement de la bâche de recouvrement (9), commande le dispositif de nettoyage (30), de préférence **en ce que**, lors de l'enroulement et/ou du déroulement de la bâche de recouvrement (9), la commande d'installation (40) commande l'applicateur (31) pour le liquide de nettoyage (32).

10. Ligne de traitement par trempage avec au moins deux stations de traitement par trempage, **caractérisée en ce qu'**au moins une des stations de traitement par trempage, en particulier au moins une station de dégraissage, est conformée en installation de traitement par trempage (1) selon une des revendications précédentes.

11. Ligne de traitement par trempage selon la revendication 10, **caractérisée en ce que** la station de dégraissage est disposée en amont d'une station de peinturage, en particulier d'une station de peinturage KTL.
